# EUROPÄISCHE PATENTSCHRIFT

(11) **EP 1 535 564 B1**
(45) Veröffentlichungstag und Bekanntmachung des Hinweises auf die Patenterteilung: **19.08.2009**
(21) Anmeldenummer: 04027629.7
(22) Anmeldetag: 20.11.2004
(51) Int. Cl.: A47L 11/24, A47L 11/40, A47L 9/20, E01H 1/08

(54) **Bodenreinigungsmaschine**
Floor cleaning machine
Machine à nettoyer les sols

(30) Priorität: 28.11.2003 DE 10356419
(43) Veröffentlichungstag der Anmeldung: 01.06.2005
(73) Patentinhaber: Alfred Kärcher GmbH & Co. KG, 71364 Winnenden (DE)
(72) Erfinder: Haas, Ingo, 73033 Göppingen (DE); Schick, Roland, 71549 Auenwald (DE)
(74) Vertreter: Hoeger, Stellrecht & Partner Patentanwälte

(56) Entgegenhaltungen:
- EP-A- 0 793 988
- EP-A- 0 970 652
- DE-A1- 4 330 233
- DE-C1- 4 138 223
- US-A- 4 704 144
- US-A- 5 013 333
- US-A- 5 194 077

## Beschreibung

Die Erfindung betrifft eine Bodenreinigungsmaschine mit einem Schmutzaufnahmebehälter, der über eine Saugleitung mit einem Saugaggregat in Strömungsverbindung steht, wobei an der Saugleitung ein Faltenfilter angeordnet ist, und mit einer Filterabreinigungsvorrichtung, die mindestens einen Abstreifer aufweist, der zur Filterabreinigung an den Falten des Faltenfilters angreift, wobei das Faltenfilter und der Abstreifer relativ zueinander quer zur Längsrichtung der Falten bewegbar sind.

Derartige Bodenreinigungsgeräte kommen beispielsweise als Kehr-Saugmaschinen zum Einsatz, mit deren Hilfe eine Bodenfläche gereinigt werden kann. Mittels einer Kehrwalze kann Schmutz von der zu reinigenden Bodenfläche in den Schmutzaufnahmebehälter überführt werden, wobei mittels des Saugaggregates im Bereich der Kehrwalze und des Schmutzaufnahmebehälters eine Saugströmung erzeugt werden kann. Dadurch kann die Staubentwicklung bei der Bodenreinigung erheblich vermindert werden, und gleichzeitig wird aufgrund der Saugströmung die Effektivität der Reinigung erhöht.

Während des Betriebes der Bodenreinigungsmaschine setzt sich das Faltenfilter allmählich mit Schmutzpartikeln zu, so daß das Faltenfilter einen zunehmenden Strömungswiderstand für die Saugströmung ausbildet, die dadurch allmählich an Wirkung verliert. Es ist deshalb erforderlich, das Faltenfilter nach einiger Betriebszeit der Bodenreinigungsmaschine abzureinigen. Hierzu ist es beispielsweise aus der DE 37 34 355 C2 bekannt, einen Abstreifer an den Falten des Faltenfilters entlang zu führen, so daß die Falten vom Abstreifer verformt werden und anschließend in ihre Ausgangslage zurückschnellen. Dadurch wird am Faltenfilter anhaftender Schmutz gelöst, der anschließend vom Schmutzaufnahmebehälter aufgenommen wird.

In der EP 0 793 988 wird eine Bodenreinigungsmaschine der eingangs genannten Art beschrieben, bei der ein hohlzyllnderförmiges Faltenfilter zum Einsatz kommt, das zur Filterabreinigung manuell oder elektromotorisch um seine Zylinderachse in Drehung versetzt werden kann, während der Abstreifer im Schmutzaufnahmebehälter fixiert ist. Zur Filterabreinigung wird das Saugaggregat abgeschaltet, so daß das Faltenfilter keiner Saugströmung unterliegt. Dies hat eine wirkungsvolle Filterabreinigung zur Folge, es ist allerdings nachteilig, daß während der Filterabreinigung die Bodenreinigungsmaschine nicht zur Bodenreinigung eingesetzt werden kann, denn bei ausgeschaltetem Saugaggregat wäre der Betrieb der Bodenreinigungsmaschine mit einer starken Staubentwicklung verbunden. In der EP 0 793 988 A2 wird deshalb ergänzend vorgeschlagen, zwei Faltenfilter innerhalb des Schmutzaufnahmebehälters drehbar zu lagern, wobei die Saugströmung alternativ durch eines der beiden Faltenfilter hindurchgeführt wird. Somit kann eines der beiden Faltenfilter wirkungsvoll abgereinigt werden, ohne daß es einer Saugströmung unterliegt, während das andere Faltenfilter zur Schmutzabscheidung zum Einsatz kommt. Hierzu sind allerdings zwei in Strömungsrichtung parallel geschaltete Faltenfilter erforderlich, denen jeweils ein Drehantrieb sowie eine die Strömungsverbindung zum Saugaggregat wahlweise freigebende und unterbrechende Schließklappe zugeordnet ist. Dies hat einen konstruktiv aufwendigen Aufbau der Bodenreinigungsmaschine zur Folge und erhöht deren Herstellungskosten.

Aus der EP-A-0 970 652 ist eine Bodenreinigungsmaschine bekannt, bei der ein einziges Filter in zwei Filterbereiche unterteilt ist, die abwechselnd vom Saugaggregat abgetrennt und dann gereinigt werden können. Die Abreinigung erfolgt dadurch, dass die Falten der Filterbereiche von einem zwischen die Falten greifenden Kamm hin und her gerüttelt werden, wobei der Filterbereich gleichzeitig mittels eines Ventils vom Saugaggregat abgetrennt ist. Zum Öffnen und Schließen weist jedes Ventil eine Magnetspule auf und der Antrieb der beiden Kämme erfolgt jeweils mittels einer weiteren Magnetspule.

In der US-A-5,194,077 ist eine Bodenreinigungsmaschine beschrieben, bei der zwischen einem Schmutzaufnahmebehälter und einem Saugaggregat seitlich nebeneinander zwei Faltenfilter angeordnet sind, die zur Abreinigung jeweils mittels eines motorisch angetriebenen Klopfers abgeklopft werden können. Stromaufwärts der Filter ist in einem Kanal jeweils eine Tür angeordnet, die mittels einer Magnetspule zwischen einer geöffneten Stellung und einer geschlossenen Stellung verschwenkt werden kann. Die Abreinigung der Filter erfolgt nacheinander, wobei das jeweilige Filter abgeklopft und gleichzeitig die vorgelagerte Tür geschlossen wird.

Eine weitere Bodenreinigungsmaschine mit zwei Faltenfiltern, die im Wechsel durch eine Schütteleinheit geschüttelt und dadurch abgereinigt werden können, ist in der US-A-5 013 333 beschrieben. Die Faltenfilter können während ihrer Abreinigung mittels eines Ventils jeweils vom Saugaggregat getrennt werden.

Aufgabe der vorliegenden Erfindung ist es, eine Bodenreinigungsmaschine der eingangs genannten Art derart weiterzubilden, daß sie eine konstruktiv einfachere Ausgestaltung aufweist und das Faltenfilter zuverlässig abgereinigt werden kann.

Diese Aufgabe wird bei einer Bodenreinigungsmaschine der gattungsgemäßen Art erfindungsgemäß dadurch gelöst, daß das Faltenfilter einen ersten und einen zweiten Filterbereich umfaßt, wobei der erste Filterbereich bei eingeschaltetem Saugaggregat permanent mit dem Saugaggregat in Strömungsverbindung steht, und wobei die Strömungsverbindung zwischen dem zweiten Filterbereich und dem Saugaggregat wahlweise freigebbar und unterbrechbar ist.

Bei der erflndungsgemäßen Bodenreinigungsmaschine kann durch den ersten Filterbereich hindurch eine andauernde Saugströmung aufrechterhalten werden, solange das Saugaggregat in Betrieb ist. Wird bei eingeschaltetem Saugaggregat das Faltenfilter relativ zum Abstreifer bewegt, so wird der erste Filterbereich mittels des Abstreifers abgereinigt bei andauernder Saugströmung. Im Gegensatz hierzu kann der zweite Filterbereich vom Saugaggregat abgetrennt werden, so daß eine Filterabreinigung des zweiten Filterbereiches ohne eine auf Ihn einwirkende Saugströmung erfolgen kann. Wird das Saugaggregat ausgeschaltet, so können beide Filterbereiche ohne auf sie einwirkende Saugströmung mittels des Abstreifers wirkungsvoll abgereinigt werden.

Von Vorteil ist es, wenn die Filterabreinigungsvorrichtung ein Sperrelement zum wahlweisen Freigeben und Unterbrechen der Strömungsverbindung zwischen dem zweiten Filterbereich und dem Saugaggregat umfaßt sowie ein Antriebselement zum Erzeugen einer Relativbewegung zwischen dem Abstreifer und dem Faltenfilter, wobei das Sperrelement mit dem Antriebselement gekoppelt ist. Mittels des Antriebselementes kann eine Relativbewegung zwischen dem Faltenfilter und dem Abstreifer erzeugt werden, und mittels des Sperrelementes kann die Strömungsverbindung zwischen dem zweiten Filterbereich und dem Saugaggregat unterbrochen werden. Die Betätigung des Sperrelementes kann hierbei mit Hilfe des Antriebselementes erfolgen, das mit dem Sperrelement gekoppelt ist. Ein zusätzliches Betätigungsorgan kann für das Sperrelement entfallen. Es kann vielmehr vorgesehen sein, daß das Sperrelement mittels des Antriebselementes zwischen seiner Freigabestellung und seiner Unterbrechungsstellung hin und her bewegbar ist, zum Beispiel um eine Drehachse in Drehung versetzt werden kann.

Das Antriebselement kann beispielsweise als Elektromotor ausgestaltet sein. Hierbei ist es von Vorteil, wenn die Drehrichtung des Elektromotors umkehrbar ist, denn dadurch kann auf konstruktiv einfache Weise eine Hin- und Herbewegung des Sperrelementes zwischen seiner Freigabestellung und seiner Unterbrechungsstellung erzielt werden.

Günstig ist es, wenn das Sperrelement drehfest an einer Antriebswelle gehalten ist, die vom Elektromotor drehend antreibbar ist. Mittels der Antriebswelle kann zusätzlich zum Sperrelement auch das Faltenfilter oder der zugeordnete Abstreifer in Bewegung versetzt werden.

Bei einer bevorzugten Ausgestaltung der erfindungsgemäßen Bodenreinigungsmaschine ist das Sperrelement als drehbare Blende ausgestaltet, die in einer ersten Drehstellung eine zugeordnete Durchlaßöffnung freigibt und in einer zweiten Drehstellung die Durchlaßöffnung abdeckt, wobei die Durchlaßöffnung stromabwärts des zweiten Filterbereiches in der Saugleitung angeordnet ist. Mittels des drehbaren Sperrelementes kann die Durchlaßöffnung wahlweise freigegeben oder abgedeckt werden, um dadurch die Strömungsverbindung zwischen dem zweiten Filterbereich und dem Saugaggregat wahlweise bereitzustellen oder zu unterbrechen.

Günstig ist es, wenn das Faltenfilter ein zylinderförmiges, drehbar gelagertes und Durchbrechungen aufweisendes Stützrohr in Umfangsrichtung umgibt, wobei das Stützrohr mittels des Antriebselementes um seine Zylinderachse drehbar ist und das Sperrelement aufnimmt. Das Stützrohr bildet somit einen Teil der Saugleitung zwischen dem Faltenfilter und dem Saugaggregat und dient gleichzeitig der Abstützung des Faltenfilters, indem dieses mit seiner stromabwärtigen Seite an das Stützrohr anlegbar ist. Zur Erzeugung einer Relativbewegung zwischen dem Faltenfilter und dem Abstreifer kann das Stützrohr um seine Zylinderachse in Drehung versetzt werden. Innerhalb des Stützrohres ist das Sperrelement angeordnet. Ein zusätzlicher Bauraum für das Sperrelement ist folglich nicht erforderlich, und durch Betätigung des Sperrelementes kann auf konstruktiv einfache Weise der stromaufwärts des Sperrelements positionierte Bereich des Faltenfilters wahlweise mit dem Saugaggregat in Strömungsverbindung gebracht oder vom Saugaggregat abgetrennt werden.

Von besonderem Vorteil im Hinblick auf eine kompakte Ausgestaltung der Bodenreinigungsmaschine ist es, wenn das Sperrelement drehfest an einer um die Zylinderachse des Stützrohres drehbaren Antriebswelle gehalten ist, die in das Stützrohr eintaucht, wobei das Sperrelement über Kopplungselemente mit dem Stützrohr gekoppelt ist. Dies gibt die Möglichkeit, die Antriebswelle mittels des Antriebselementes in Drehung zu versetzen, so daß das Sperrelement um die Zylinderachse des Stützrohres gedreht und zwischen seiner Freigabestellung und seiner Unterbrechungsstellung hin und her bewegt werden kann, und die Drehbewegung des Sperrelementes kann über die Kopplungselemente auf das Stützrohr übertragen werden, so daß auch das Stützrohr und mit diesem das an ihm anliegende Faltenfilter zur Filterabreinigung in Drehung versetzt werden können.

Vorzugsweise umfassen die Kopplungselemente zumindest einen Anschlag, der mit einem Stützelement zusammenwirkt. Die Drehbewegung des Sperrelementes kann folglich über den Anschlag und das Stützelement auf das Stützrohr übertragen werden. Der Anschlag ist günstigerweise am Sperrelement positioniert und das Stützelement kann am Stützrohr gehalten sein.

Bei einer bevorzugten Ausführungsform der Erfindung ist der Anschlag an einer Durchbrechung des Sperrelementes angeordnet. Die Durchbrechung kann beispielsweise als Langloch ausgestaltet sein, das vom Stützelement durchgriffen ist, wobei die Längserstreckung des Langloches größer gewählt ist als der Durchmesser des Stützelementes. Wird das Sperrelement in Drehung versetzt, so wird die Drehbewegung des Sperrelementes auf das Stützelement übertragen, sobald dieses an einen ersten Wandungsbereich des Langloches anschlägt. Dies hat den Vorteil, daß das Sperrelement zunächst bezogen auf das Stützrohr frei drehbar ist und damit beispielsweise ausgehend von seiner Freigabestellung in seine Unterbrechungsstellung überführt werden kann, und erst bei weiterer Drehbewegung des Sperrelementes stößt das Stützelement an den ersten Wandungsbereich des Langloches, so daß dann die Drehbewegung des Sperrelementes über das Stützelement auf das Stützrohr übertragen werden kann. Wird die Drehrichtung des Sperrelementes umgekehrt, so kann das Sperrelement anfänglich wiederum - bezogen auf das Stützrohr - frei gedreht werden und somit wieder in seine Freigabestellung überführt werden, und erst bei einer weiteren Drehbewegung stößt das Stützelement an einer dem ersten Wandungsbereich gegenüberliegenden zweiten Wandungsbereich des Langloches, so daß dann eine weitere Drehbewegung des Sperrelementes auf das Stützrohr übertragen werden kann.

Das Stützelement ist bei einer vorteilhaften Ausführungsform als das Stützrohr in Längsrichtung durchgreifende Traverse ausgestaltet. Die Traverse kann an stirnseitigen Endkappen des Stützrohres gehalten sein, die mit dem Stützrohr starr verbunden sind. Eine erste Endkappe kann einen Deckel ausbilden, der das Stützrohr endseitig strömungsdicht abschließt, während die zweite Endkappe Öffnungen aufweisen kann, durch die die Saugströmung hindurchtreten kann.

Wie bereits erläutert, kann bei laufendem Saugaggregat eine Filterabreinigung erfolgen, wobei lediglich der erste Filterbereich von der Saugströmung beaufschlagt wird, während der zweite Filterbereich von der Saugströmung abgekoppelt werden kann. Um auch den ersten Filterbereich ohne Beaufschlagung einer Saugströmung abreinigen zu können, ist bei einer besonders bevorzugten Ausführungsform vorgesehen, daß das Faltenfilter bei ausgeschaltetem Saugaggregat relativ zum Abstreifer bewegbar ist.

Hierbei ist es von Vorteil, wenn das Faltenfilter nach dem Ausschalten des Saugaggregates selbsttätig relativ zum Abstreifer bewegbar ist. Dadurch wird die Handhabung der Bodenreinigungsmaschine erheblich vereinfacht, denn nach Beendigung der Bodenreinigung muß der Benutzer lediglich das Saugaggregat abschalten, und anschließend kann selbsttätig eine Filterabreinigung durchgeführt werden, ohne daß ein Bereich des Faltenfilters mit Saugströmung beaufschlagt wird.

Die erfindungsgemäße Bodenreinigungsmaschine ist vorzugsweise als fahrbare Kehr-Saugmaschine ausgestaltet und umfaßt eine Kehrwalze, die dem Schmutzaufnahmebehälter benachbart angeordnet ist.

Die nachfolgende Beschreibung einer bevorzugten Ausführungsform der Erfindung dient im Zusammenhang mit der Zeichnung der näheren Erläuterung. Es zeigen:
- Figur 1:: eine schematische Darstellung einer erfindungsgemäßen Bodenreinigungsmaschine;
- Figur 2:: eine Schnittansicht eines Faltenfilters der Bodenreinigungsmaschine mit einem ersten und einem zweiten Filterbereich, wobei beide Filterbereiche von Saugluft durchströmt werden;
- Figur 3:: eine Schnittansicht des Faltenfilters entsprechend Figur 2, wobei lediglich der erste Filterbereich von Saugluft durchströmt wird;
- Figur 4:: eine perspektivische Darstellung des Faltenfilters mit zugeordnetem Abstreifer und
- Figur 5:: eine perspektivische Darstellung eines Sperrelementes.

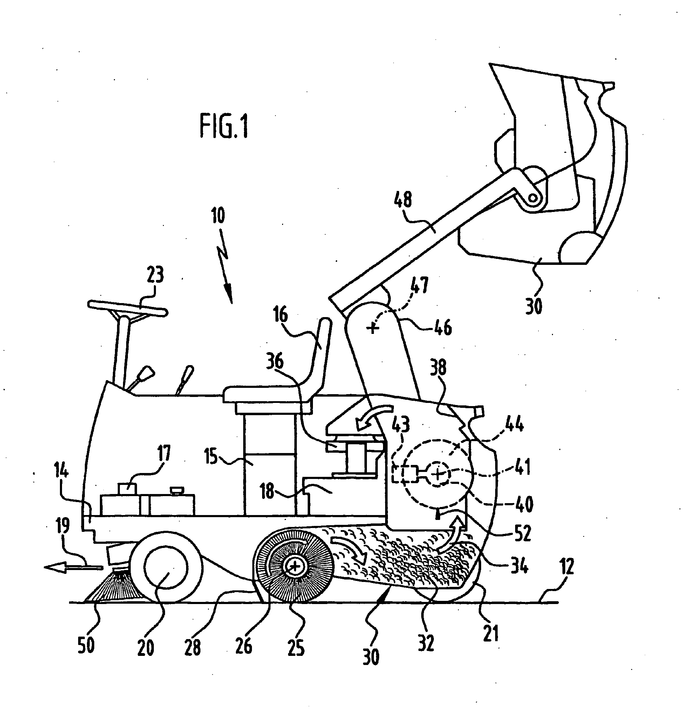

In Figur 1 ist schematisch eine erfindungsgemäße Bodenreinigungsmaschine in Form einer insgesamt mit dem Bezugszeichen 10 belegten fahrbaren Kehr-Saugmaschine dargestellt, mit deren Hilfe eine Bodenfläche 12 gereinigt werden kann. Sie umfaßt ein Fahrgestellt 14, das oberseitig einen Batteriekasten 15 trägt, der zur Energieversorgung der Kehr-Saugmaschine eine Batterie aufnimmt. Auf dem Batteriekasten 15 ist ein Sitz 16 gehalten, auf dem der Benutzer beim Verfahren der Kehr-Saugmaschine 10 Platz nehmen kann.

Der Fahrantrieb der Kehr-Saugmaschine 10 erfolgt mit Hilfe eines Hydraulikaggregates 17, das mit einer in der Zeichnung nicht dargestellten Elektropumpe gekoppelt ist und mit einem hinter dem Batteriekasten 15 positionierten Hydrostat-Getriebe 18 in Wirkverbindung steht.

Unterseitig sind am Fahrgestell 14 Vorderräder 20 und Hinterräder 21 gehalten. Die Vorderräder 20 sind mit einem in Fahrtrichtung 19 vor dem Sitz 16 angeordneten Lenkrad 23 gekoppelt. Zwischen den Vorder- und Hinterrädern 20, 21 ist unterseitig am Fahrgestell 14 eine auf die Bodenfläche 12 absenkbare und von dieser anhebbare Kehrwalze 25 gehalten, die um eine quer zur Fahrtrichtung 19 ausgerichtete Walzenachse 26 drehend antreibbar ist und mit deren Hilfe die Bodenfläche gekehrt werden kann. In Fahrtrichtung 19 vor der Kehrwalze 25 ist eine Grobschmutzklappe 28 an der Unterseite des Fahrgestells 14 positioniert, und hinter der Kehrwalze 25 ist ein Schmutzaufnahmebehälter 30 angeordnet, in den das von der Kehrwalze 25 aufgenommene Kehrgut 32 überführt werden kann.

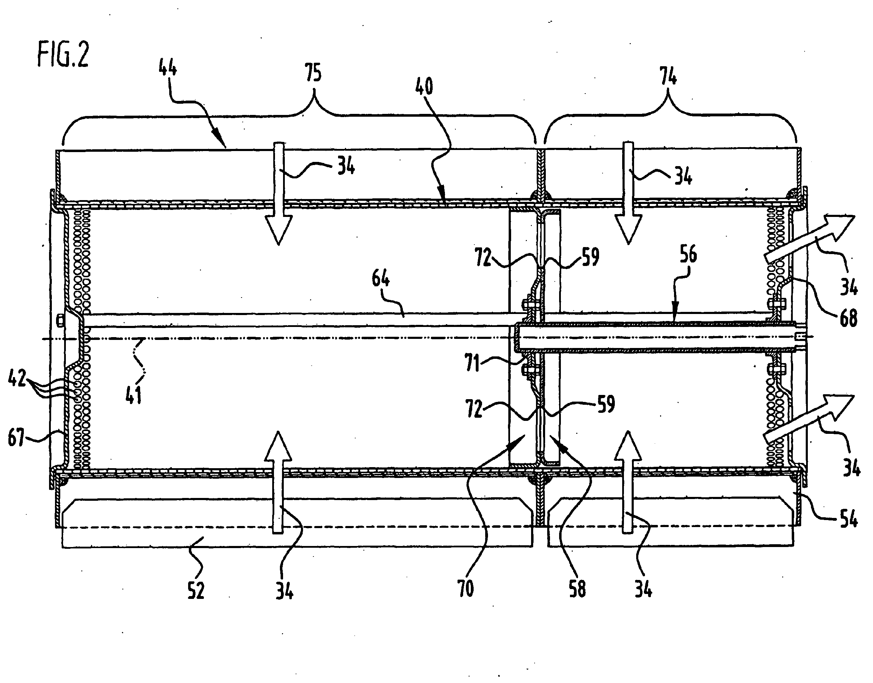

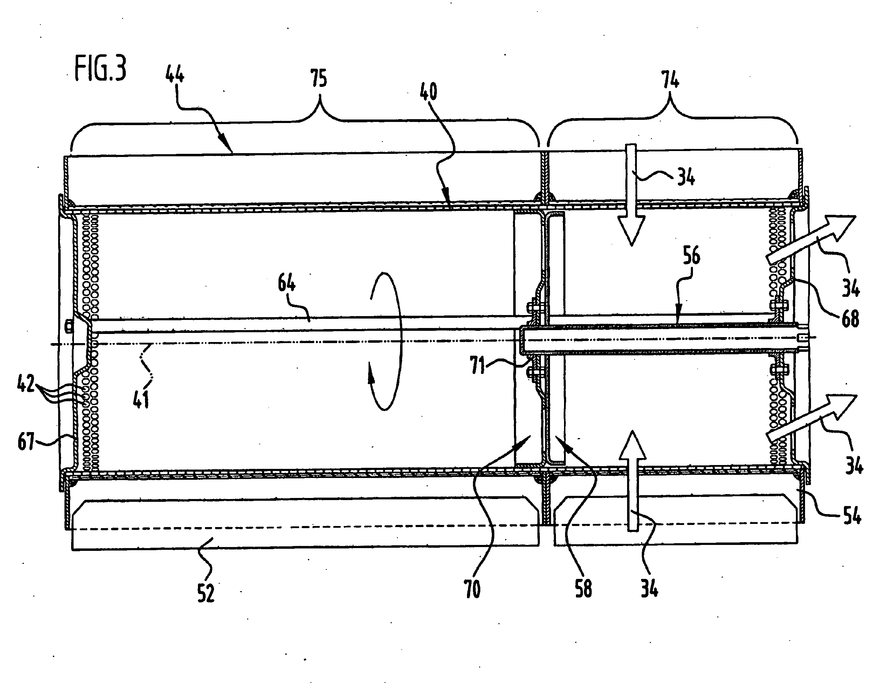

Die Aufnahme des Kehrguts in den Schmutzaufnahmebehälter 30 wird von einer Saugströmung 34 unterstützt, die von einem oberhalb des Hydrostatgetriebes 18 angeordneten Saugaggregat 36 erzeugt wird, das über einen Saugkanal 38 mit dem Schmutzaufnahmebehälter 30 in Strömungsverbindung steht. Der Saugkanal 38 ist an einer Längsseite der Kehr-Saugmaschine 10 am Fahrgestell 14 festgelegt und steht über ein quer zur Fahrtrichtung 19 ausgerichtetes Stützrohr 40 mit dem Schmutzaufnahmebehälter 30 in Strömungsverbindung. Das Stützrohr 40 ist zylinderförmig ausgestaltet und kann mittels eines Antriebselementes in Form eines Elektromotors 43 um seine Zylinderachse 41 in Drehung versetzt werden. Wie insbesondere aus den Figuren 2 und 3 deutlich wird, weist das Stützrohr 40 über seine gesamte Länge und seinen gesamten Umfang eine Vielzahl von Durchbrechungen 42 auf. In den Figuren 2 und 3 sind zur Erzielung einer besseren Übersicht diese Durchbrechungen 42 nur ausschnittsweise dargestellt. In Umfangsrichtung ist das Stützrohr 40 von einem sternförmig gefalteten Faltenfilter 44 umgeben, durch das die Saugströmung 34 hindurchgeführt ist.

Zur Entleerung kann der Schmutzaufnahmebehälter 30 angehoben werden. Hierzu umfaßt die Kehr-Saugmaschine 10 nach oben abstehende Ausleger 46, an denen um eine quer zur Fahrtrichtung 19 ausgerichtete Schwenkachse 47 verschwenkbar Schwenkarme 48 gehalten sind, die den Schmutzaufnahmebehälter 30 seitlich zwischen sich aufnehmen. In Figur 1 ist der Schmutzaufnahmebehälter in durchgezogener Linie in abgesenkter, unmittelbar hinter der Kehrwalze 25 positionierter Stellung dargestellt, und in gestrichelter Linie ist der Schmutzaufnahmebehälter 30 in seiner angehobenen Stellung illustriert.

Um auch Randbereiche der zu reinigenden Bodenfläche 12 zuverlässig erfassen zu können, ist vor den Vorderrädern 20 am Fahrgestell 14 eine seitlich über die Außenkontur des Fahrgestells 14 hinausragende Seitenbürste 50 drehbar gehalten, die als Tellerbürste ausgestaltet ist.

Wie bereits erläutert, kann mit der Kehrwalze 25 Kehrgut in den Schmutzaufnahmebehälter 30 überführt werden, wobei gleichzeitig mittels des Saugaggregates 36 eine Saugströmung hervorgerufen wird, die die Aufnahme des Kehrgutes 32 unterstützt und eine Staubentwicklung beim Kehren der Bodenfläche 12 verhindert. Die Saugströmung 34 wird in radialer Richtung durch das Faltenfilter 44 hindurchgeführt, strömt anschließend quer zur Fahrtrichtung 19 längs des Stützrohres 40 und wird von diesem - in den Figuren 2 und 3 auf der rechten Seite - an den Saugkanal 38 übergeben, von dem aus die Saugströmung 44 zum Saugaggregat 36 weitergeleitet wird. Das Stützrohr 40 bildet somit in Kombination mit dem Saugkanal 38 eine Saugleitung, über die der Schmutzaufnahmebehälter 30 mit dem Saugaggregat 36 in Strömungsverbindung steht.

Feinschmutz, der von der Saugströmung 34 mitgeführt wird, lagert sich an der Außenseite des Faltenfilters 44 an, so daß dieses einen zunehmenden Strömungswiderstand für die Saugströmung 34 ausbildet. Bei der Kehr-Saugmaschine 10 ist deshalb vorgesehen, daß das Faltenfilter 44 abgereinigt werden kann. Hierzu ist unterhalb des Faltenfilters 10 eine Filterabreinigungsvorrichtung mit einem Abstreifer 52 fixiert, der an den Falten 54 des Faltenfilters 44 angreift. Zur Filterabreinigung kann das Stützrohr 40 und das an ihm gehaltene Faltenfilter 44 mittels des Elektromotors 43 um die Zylinderachse 41 in Drehung versetzt werden, so daß das Faltenfilter 44 eine Relativbewegung bezogen auf den Abstreifer 52 ausführt, wobei die flexibel ausgebildeten Falten 54 vom Abstreifer 52 aus ihrer Ursprungslage ausgelenkt werden und anschließend in diese zurückschnellen, so daß an den Falten 54 anhaftender Schmutz abgelöst wird und in den Schmutzaufnahmebehälter 30 fällt.

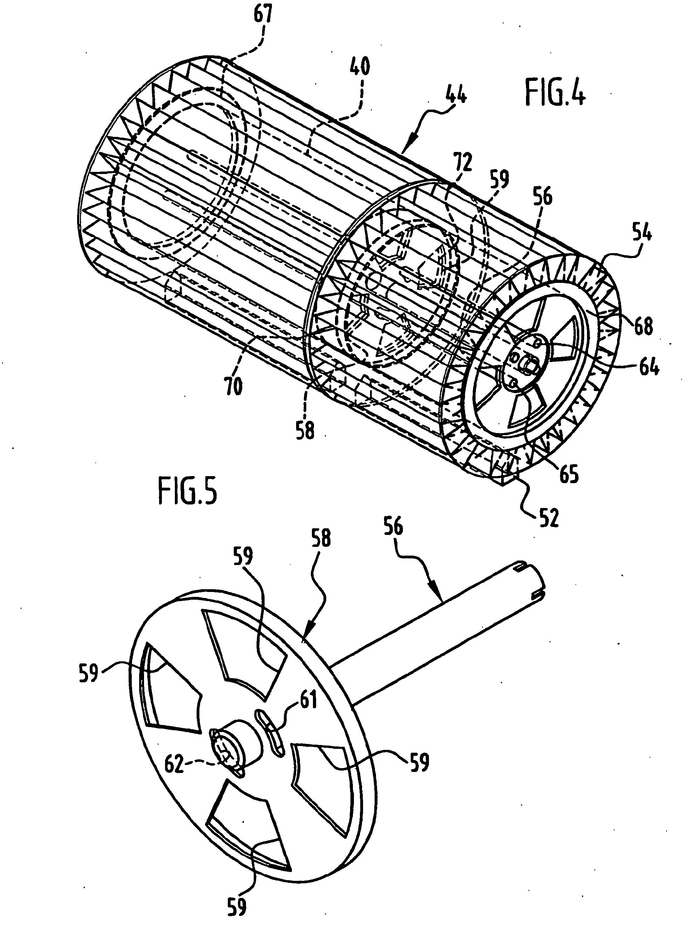

Der Drehantrieb des Stützrohrs 40 erfolgt vom Elektromotor 43 über eine koaxial zum Stützrohr 40 ausgerichtete und von diesem aufgenommene Antriebswelle 56, die über ein an sich bekanntes und deshalb in der Zeichnung nicht dargestelltes Getriebe mit dem Elektromotor 43 gekoppelt ist und an ihrem in das Stützrohr 40 eintauchenden Ende ein Sperrelement in Form einer ersten Blende 58 trägt. Dies wird insbesondere aus Figur 5 deutlich. Die erste Blende 58 weist vier über ihren Umfang gleichmäßig verteilt angeordnete Durchbrechungen 59 auf und ist an der Antriebswelle 56 drehfest gehalten. Zusätzlich weist die erste Blende 58 zwei einander diametral gegenüberliegende Längsbohrungen 61, 62 auf, die in Drehrichtung der Antriebswelle 56 ausgerichtet sind. Die Längsbohrungen 61, 62 werden jeweils von einer Traverse 64 bzw. 65 durchgriffen, die parallel zur Zylinderachse 41 des Stützrohrs 40 ausgerichtet und an stirnseitigen Endkappen 67, 68 des Stützrohrs 40 festgelegt sind. Die Endkappe 67 ist auf der Antriebswelle 56 abgewandten Stirnseite des Stützrohres 40 angeordnet und bildet einen das Stützrohr 40 stirnseitig strömungsdicht abschließenden Deckel. Im Gegensatz hierzu weist die Endkappe 68, die von der Antriebswelle 56 durchgriffen ist, mehrere Auslaßöffnungen 70 auf, durch die die Saugströmung 34 hindurchtreten kann.

An den Traversen 64, 65 ist eine zweite Blende 70 festgelegt, die der ersten Blende 58 unmittelbar benachbart angeordnet ist und mittels einer Stützhülse 71 an der Antriebswelle 56 abgestützt ist. Bei einer Drehbewegung der Antriebswelle 56 kann die Stützhülse 71 am Außenumfang der Antriebswelle 56 entlang gleiten. Die zweite Blende 70 weist entsprechend der ersten Blende 58 Durchbrechungen 72 auf, die je nach Drehstellung der an der Antriebswelle 56 festgelegten ersten Blende 58 mit den Durchbrechungen 59 der ersten Blende 58 zur Deckung gebracht werden können, wie dies in Figur 2 dargestellt ist, oder aber in Drehrichtung der Antriebswelle 56 versetzt zu den Durchbrechungen 59 der ersten Blende 58 positioniert werden können, so daß die erste Blende 58 die Durchbrechungen 72 der zweiten Blende 70 abdeckt, wie dies in Figur 3 illustriert ist.

Wird zur Filterabreinigung der Elektromotor 43 eingeschaltet, so wird die Antriebswelle 56 und die an ihr festgelegte erste Blende 58 um die Zylinderachse 41 in Drehung versetzt. Hierbei kann aufgrund der Längserstreckung der Längsbohrungen 61 und 62 die erste Blende 58 relativ zur zweiten Blende 70 zunächst in eine Drehstellung verdreht werden, in der die Durchbrechungen 72 der zweiten Blende 70 von der ersten Blende 58 abgedeckt werden. Beim weiteren Verdrehen der Antriebswelle 56 stoßen die Traversen 64 und 65 jeweils an eine Endseite der Längsbohrungen 61 bzw. 62 an, so daß die Drehbewegung der Antriebswelle 56 über die erste Blende 58 und die Traversen 64, 65 auf das Stützrohr 40 und das an diesem gehaltene Faltenfilter 44 übertragen wird. Das Faltenfilter 44 führt somit eine Drehbewegung durch, so daß die Falten 54 vom Abstreifer 52 zuverlässig abgereinigt werden. Da jedoch in diesem Zustand die Durchbrechungen 72 der zweiten Blende 70 von der ersten Blende 58 abgedeckt werden, wird während der Filterabreinigung lediglich ein erster Filterbereich, nämlich der zwischen der Endkappe 68 und der ersten Blende 58 angeordnete Bereich 74 des Faltenfilters 44, von der Saugströmung durchströmt, während ein zweiter Filterbereich 75, nämlich der Bereich des Faltenfilters 44, der zwischen der ersten Blende 58 und der Endkappe 67 angeordnet ist, von der Saugströmung 34 abgetrennt ist. Dies ist in Figur 3 dargestellt. Aufgrund der fehlenden Beaufschlagung des zweiten Filterbereiches 75 mit der Saugströmung 74 kann dieser Filterbereich besonders effektiv abgereinigt werden, wobei gleichzeitig aufgrund der Aufrechterhaltung der Saugströmung 34 durch den ersten Filterbereich 74 hindurch sichergestellt ist, daß während der Filterabreinigung eine den Schmutzaufnahmebehälter 30 durchgreifende Saugströmung aufrechterhalten wird zur Vermeidung einer Staubentwicklung während der Filterabreinigung.

In einem weiteren Verfahrensschritt kann die Drehrichtung des Elektromotors 43 umgekehrt werden. Dies hat zur Folge, daß zunächst die erste Blende 58 relativ zur zweiten Blende 70 in eine Drehstellung verdreht wird, in der die jeweiligen Durchbrechungen 59 und 72 zur Deckung gebracht werden können, wie dies in Figur 2 dargestellt ist, so daß nunmehr die Saugströmung 34 sowohl den ersten Filterbereich 74 als auch den zweiten Filterbereich 75 passieren kann. Dies ist in Figur 2 dargestellt. Damit ist die Filterabreinigung abgeschlossen.

Nach erfolgter Reinigung der Bodenfläche 12 kann der Benutzer das Saugaggregat 36 abschalten. Dies hat zur Folge, daß mittels einer in der Zeichnung nicht dargestellten Steuereinheit der Kehr-Saugmaschine 10 der Elektromotor 43 kurzfristig aktiviert und aufgrund der dadurch erfolgenden Drehbewegung des Faltenfilters 44 sowohl der erste Filterbereich 74 als auch der zweite Filterbereich 75 bei abgeschaltetem Saugaggregat 36 zuverlässig abgereinigt werden können. Dadurch ist sichergestellt, daß auch der erste Filterbereich 74 eine Abreinigung erfährt, bei der er von der Saugströmung 74 nicht beaufschlagt wird.

## Patentansprüche

1. Bodenreinigungsmaschine (10) mit einem Schmutzaufnahmebehälter (30), der über eine Saugleitung mit einem Saugaggregat (36) in Strömungsverbindung steht, wobei an der Saugleitung ein Faltenfilter (44) angeordnet ist, und mit einer Filterabreinlgungsvorrichtung, die mindestens einen Abstreifer (52) aufweist, der zur Filterabreinigung an den Falten (54) des Faltenfilters (44) angreift, wobei das Faltenfilter (44) und der Abstreifer (52) relativ zueinander quer zur Längsrichtung der Falten (54) bewegbar sind, **dadurch gekennzeichnet, daß** das Faltenfilter (44) einen ersten und einen zweiten Filterbereich (74, 75) umfaßt, wobei der erste Filterbereich (74) bei eingeschaltetem Saugaggregat (36) permanent mit dem Saugaggregat (36) in Strömungsverbindung steht, und wobei die Strömungsverbindung zwischen dem zweiten Filterbereich (75) und dem Saugaggregat (36) wahlweise freigebbar und unterbrechbar ist.

2. Bodenreinigungsmaschine nach Anspruch 1, **dadurch gekennzeichnet, daß** die Filterabreinigungsvorrichtung ein Sperrelement (58) zum wahlweisen Freigeben und Unterbrechen der Strömungsverbindung zwischen dem zweiten Filterbereich (75) und dem Saugaggregat (36) umfaßt, sowie ein Antriebselement (43) zum Erzeugen einer Relativbewegung zwischen dem Abstreifer (52) und dem Faltenfilter (44), wobei das Sperrelement (58) mit dem Antriebselement (43) gekoppelt ist.

3. Bodenreinigungsmaschine nach Anspruch 2, **dadurch gekennzeichnet, daß** das Sperrelement (58) mittels des Antriebselementes (43) zwischen einer Freigabestellung und einer Unterbrechungsstellung hin und her bewegbar ist.

4. Bodenreinigungsmaschine nach Anspruch 2 oder 3, **dadurch gekennzeichnet, daß** das Antriebselement als Elektromotor (43) ausgestaltet ist.

5. Bodenreinigungsmaschine nach Anspruch 4, **dadurch gekennzeichnet, daß** die Drehrichtung des Elektromotors (43) umkehrbar ist.

6. Bodenreinigungsmaschine nach einem der Ansprüche 2 bis 5, **dadurch gekennzeichnet, daß** das Sperrelement (58) drehfest an einer Antriebswelle (56) gehalten ist, die vom Antriebselement (43) drehend antreibbar ist.

7. Bodenreinigungsmaschine nach einem der Ansprüche 2 bis 6, **dadurch gekennzeichnet, daß** das Sperrelement als drehbare Blende (58) ausgestaltet ist, die in einer ersten Drehstellung eine zugeordnete Durchlaßöffnung (72) freigibt und in einer zweiten Drehstellung die Durchlaßöffnung (72) abdeckt, wobei die Durchlaßöffnung (72) stromabwärts des zweiten Filterbereichs (75) in der Saugleitung angeordnet ist.

8. Bodenreinigungsmaschine nach einem der Ansprüche 2 bis 7, **dadurch gekennzeichnet, daß** das Faltenfilter (44) ein zylinderförmiges, drehbar gelagertes und Durchbrechungen (42) aufweisendes Stützrohr (40) in Umfangsrichtung umgibt, wobei das Stützrohr (40) mittels des Antriebselementes (43) um seine Zylinderachse (41) drehbar ist und das Sperrelement (58) aufnimmt.

9. Bodenreinigungsmaschine nach Anspruch 8, **dadurch gekennzeichnet, daß** das Sperrelement (58) drehfest an einer um die Zylinderachse (41) des Stützrohres (40) drehbaren Antriebswelle (56) gehalten ist, die in das Stützrohr (40) eintaucht, wobei das Sperrelement (58) über Kopplungselemente (61, 62, 64, 65) mit dem Stützrohr (40) gekoppelt ist.

10. Bodenreinigungsmaschine nach Anspruch 9, **dadurch gekennzeichnet, daß** die Kopplungselemente zumindest einen Anschlag aufweisen, der mit einem Stützelement (64, 65) zusammenwirkt.

11. Bodenreinigungsmaschine nach Anspruch 10, **dadurch gekennzeichnet, daß** der Anschlag an einer Durchbrechung (61, 62) des Sperrelements (58) angeordnet ist.

12. Bodenreinigungsmaschine nach Anspruch 10 oder 11, **dadurch gekennzeichnet, daß** das Stützelement als starr mit dem Stützrohr (40) verbundene Traverse (64, 65) ausgestaltet ist.

13. Bodenreinigungsmaschine nach einem der voranstehenden Ansprüche, **dadurch gekennzeichnet, daß** das Faltenfilter (44) bei ausgeschaltetem Saugaggregat (36) relativ zum Abstreifer (52) bewegbar ist.

14. Bodenreinigungsmaschine nach Anspruch 13, **dadurch gekennzeichnet, daß** das Faltenfilter (44) nach dem Ausschalten des Saugaggregates (36) relativ zum Abstreifer (52) selbsttätig bewegbar ist.

## Claims

1. Floor cleaning machine (10) with a dirt receiving container (30) which is in flow connection with a suction unit (36) via a suction line, a pleated filter (44) being arranged on the suction line, and with a filter cleaning device comprising at least one scraper (52) which engages the pleats (54) of the pleated filter (44) to clean the filter, the pleated filter (44) and the scraper (52) being movable relative to each other transversely to the longitudinal direction of the pleats (54), **characterized in that** the pleated filter (44) comprises a first and a second filter area (74, 75), the first filter area (74) being permanently in flow connection with the suction unit (36) when the suction unit (36) is switched on, and it being possible to selectively enable and interrupt the flow connection between the second filter area (75) and the suction unit (36).

2. Floor cleaning machine in accordance with claim 1, **characterized in that** the filter cleaning device comprises a blocking element (58) for selectively enabling and interrupting the flow connection between the second filter area (75) and the suction unit (36), and a drive element (43) for generating a relative movement between the scraper (52) and the pleated filter (44), the blocking element (58) being coupled to the drive element (43).

3. Floor cleaning machine in accordance with claim 2, **characterized in that** the blocking element (58) is movable by the drive element (43) back and forth between an enable position and an interrupt position.

4. Floor cleaning machine in accordance with claim 2 or 3, **characterized in that** the drive element is configured as an electric motor (43).

5. Floor cleaning machine in accordance with claim 4, **characterized in that** the direction of rotation of the electric motor (43) is reversible.

6. Floor cleaning machine in accordance with any one of claims 2 to 5, **characterized in that** the blocking element (58) is rotationally fixedly held on a drive shaft (56) which is rotationally drivable by the drive element (43).

7. Floor cleaning machine in accordance with any one of claims 2 to 6, **characterized in that** the blocking element is configured as a rotatable diaphragm (58) which in a first rotational position releases an associated through-opening (72) and in a second rotational position covers the through-opening (72), the through-opening (72) being arranged downstream of the second filter area (75) in the suction line.

8. Floor cleaning machine in accordance with any one of claims 2 to 7, **characterized in that** the pleated filter (44) surrounds in the circumferential direction a cylindrical, rotatably mounted support pipe (40) having openings (42), the support pipe (40) being rotatable by the drive element (43) about its cylinder axis (41) and accommodating the blocking element (58).

9. Floor cleaning machine in accordance with claim 8, **characterized in that** the blocking element (58) is rotationally fixedly held on a drive shaft (56) which is rotatable about the cylinder axis (41) of the support pipe (40) and extends into the support pipe (40), the blocking element (58) being coupled by coupling elements (61, 62, 64, 65) to the support pipe (40).

10. Floor cleaning machine in accordance with claim 9, **characterized in that** the coupling elements comprise at least one stop which cooperates with a support element (64, 65)

11. Floor cleaning machine in accordance with claim 10, **characterized in that** the stop is arranged at an opening (61, 62) of the blocking element (58).

12. Floor cleaning machine in accordance with claim 10 or 11, **characterized in that** the support element is configured as a cross member (64, 65) which is rigidly connected to the support pipe (40).

13. Floor cleaning machine in accordance with any one of the preceding claims, **characterized in that** the pleated filter (44) is movable relative to the scraper (52) when the suction unit (36) is switched off.

14. Floor cleaning machine in accordance with claim 13, **characterized in that** the pleated filter (44) is automatically movable relative to the scraper (52) after switching-off of the suction unit (36).

## Revendications

1. Machine de nettoyage de sols (10) comportant un récipient de collecte de souillures (30) qui est en liaison d'écoulement avec une unité d'aspiration (36) par le biais d'un conduit d'aspiration, un filtre à plis (44) étant disposé au niveau du conduit d'aspiration, et un dispositif de nettoyage de filtre qui comporte au moins une racle (52) qui agit au niveau des plis (54) du filtre à plis (44) pour nettoyer ledit filtre, le filtre à plis (44) et la racle (52) étant mobiles l'un par rapport à l'autre transversalement à la direction longitudinale des plis (54), **caractérisée en ce que** le filtre à plis (44) comporte des première et deuxième régions de filtre (74, 75), la première région de filtre (74) étant en liaison d'écoulement permanent avec une unité d'aspiration (36) lorsque l'unité d'aspiration (36) est enclenchée, et la liaison d'écoulement entre la deuxième région de filtre (75) et l'unité d'aspiration (36) pouvant être au choix libérée et coupée.

2. Machine de nettoyage de sols selon la revendication 1, **caractérisée en ce que** le dispositif de nettoyage de filtre comporte un élément de blocage (58) destiné au choix à libérer ou couper la liaison d'écoulement entre la deuxième région de filtre (75) et l'unité d'aspiration (36), ainsi qu'un élément d'entraînement (43) destiné à générer un mouvement relatif entre la racle (52) et le filtre à plis (44), l'élément de blocage (58) étant couplé à l'élément d'entraînement (43).

3. Machine de nettoyage de sols selon la revendication 2, **caractérisée en ce que** l'élément de blocage (58) est mobile suivant un mouvement de va-et-vient entre une position de libération et une position de coupure, au moyen de l'élément d'entraînement (43).

4. Machine de nettoyage de sols selon la revendication 2 ou 3, **caractérisée en ce que** l'élément d'entraînement est conformé en moteur électrique (43).

5. Machine de nettoyage de sols selon la revendication 4, **caractérisée en ce que** le sens de rotation du moteur électrique (43) est inversible.

6. Machine de nettoyage de sols selon l'une des revendications 2 à 5, **caractérisée en ce que** l'élément de blocage (58) est maintenu fixe en rotation sur un arbre d'entraînement (56) qui peut être entraîné en rotation par l'élément d'entraînement (43).

7. Machine de nettoyage de sols selon l'une des revendications 2 à 6, **caractérisée en ce que** l'élément de blocage est conformée en diaphragme rotatif (58) qui, dans une première position en rotation, libère une ouverture de passage associée (72) et, dans une deuxième position en rotation, recouvre l'ouverture de passage (72), l'ouverture de passage (72) étant disposée dans le conduit d'aspiration en aval de la deuxième région de filtre (75).

8. Machine de nettoyage de sols selon l'une des revendications 2 à 7, **caractérisée en ce que** le filtre à plis (44) entoure dans la direction circonférentielle un tube de support (40), en forme de cylindre, qui est monté de façon à pouvoir tourner et qui comporte des perçages (42), le tube de support (40) étant apte à tourner autour de son axe de cylindre (41) au moyen de l'élément d'entraînement (43) et recevant l'élément de blocage (58).

9. Machine de nettoyage de sols selon la revendication 8, **caractérisée en ce que** l'élément de blocage (58) est maintenu fixe en rotation sur un arbre d'entraînement (56) qui est apte à tourner autour de l'axe de cylindre (41) du tube de support (40), et qui pénètre dans le tube de support (40), l'élément de blocage (58) étant couplé au tube de support (40) par le biais d'éléments de couplage (61, 62, 64, 65).

10. Machine de nettoyage de sols selon la revendication 9, **caractérisée en ce que** les éléments de couplage comportent au moins une butée qui coopère avec un élément de support (64, 65).

11. Machine de nettoyage de sols selon la revendication 10, **caractérisée en ce que** la butée est disposée au niveau d'un perçage (61, 62) de l'élément de blocage (58).

12. Machine de nettoyage de sols selon la revendication 10 ou 11, **caractérisée en ce que** l'élément de support est conformé en traverse (64, 65) reliée rigidement au tube de support (40).

13. Machine de nettoyage de sols selon l'une des revendications précédentes, **caractérisée en ce que** le filtre à plis (44) est apte se déplacer par rapport à la racle (52) lorsque l'unité d'aspiration (36) est arrêtée.

14. Machine de nettoyage de sols selon la revendication 13, **caractérisée en ce que** le filtre à plis (44) est apte à se déplacer de façon autonome par rapport à la racle (52) une fois que l'unité d'aspiration (36) est arrêtée.
